Europäisches Patentamt

European Patent Office

Office européen des brevets

(11) Publication number: **0 477 371 A1**

# EUROPEAN PATENT APPLICATION
## published in accordance with Art. 158(3) EPC

(21) Application number: **91902746.6**

(22) Date of filing: **21.01.91**

(86) International application number:
**PCT/JP91/00061**

(87) International publication number:
**WO 91/11048 (25.07.91 91/17)**

(51) Int. Cl.5: **H02H 3/28**

(30) Priority: **20.01.90 JP 10798/90**

(43) Date of publication of application:
**01.04.92 Bulletin 92/14**

(84) Designated Contracting States:
**CH GB LI SE**

(71) Applicant: **MITSUBISHI DENKI KABUSHIKI KAISHA**
**2-3, Marunouchi 2-chome Chiyoda-ku**
**Tokyo 100(JP)**

(72) Inventor: **ODA, Shigeto, c/o Mitsubishi Denki KabushikiKaisha**
**Seigyo Seisakusho, 1-2, Wadasakicho 1-chome**
**Hyogo-ku, Kobe-shi, Hyogo 652(JP)**

(74) Representative: **Lawson, David Glynne et al**
**MARKS & CLERK 57-60 Lincoln's Inn Fields**
**London WC2A 3LS(GB)**

(54) **DIGITAL DIFFERENTIAL RELAY SYSTEM.**

(57) A digital current differential relay system provided with a signal converter whereby current data is converted into the one having a shortened bit pulse length based on a relation and transmitted, and provided with a signal restoring device where by received data is converted inversely into current data having the original bit pulse length, which enables the relay characteristic to be affected scarecely, even if the transmitted data is of 12 bits in data length or the data is the one corresponding to 16 bits in data length, by shortening the bit pulse length with the signal converter and transmitting at the transmission side and by restoring the bit pulse length to the original one with the signal restoring device at the reception side.

FIG.1

## Field of the Invention

This invention relates to a digital differential relay system which carries out power line protection by periodically sampling an instantaneous value of electric physical quantity at both terminals of a power line, and by exchanging digital data obtained by the sampling each other.

## Description of Related Art

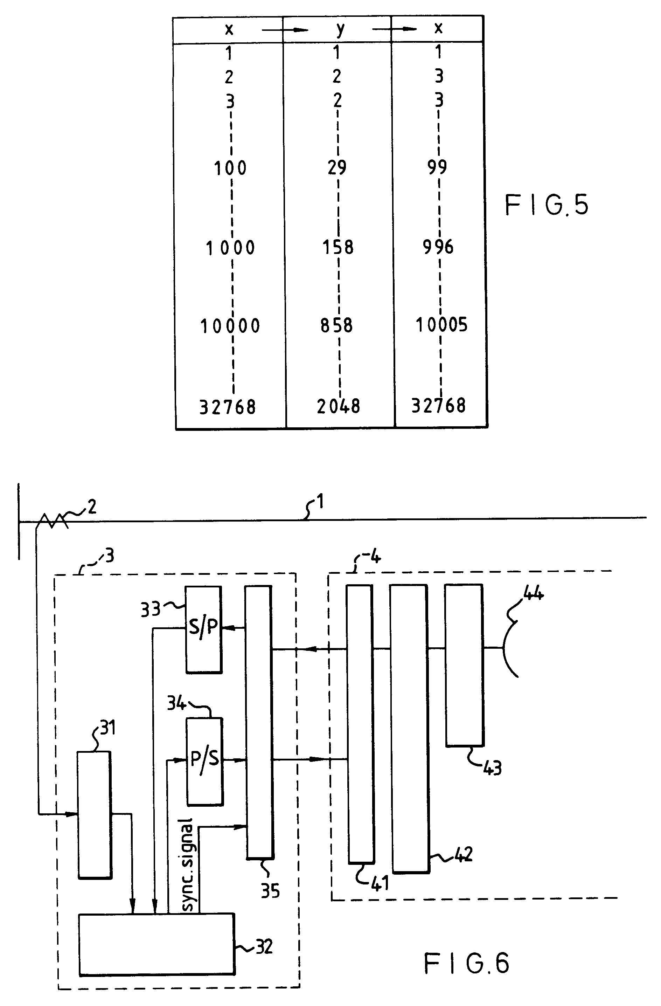

As a conventional digital current differential relay system, there is the one disclosed in Fig. 6, for example. Fig. 6 is a block diagram showing a conventional PCM current differential system disclosed in a publication "Relay System Committee Report - cooperation between protective relay device and transmission system" published by Foundation the Power Central Laboratory in November, 1986. In Fig. 6, on a power line 1 to be protected, a current transformer 2 is provided which transforms current flowing through the power line into relay input, the current transformer 2 being connected with a relay unit 3.

The abovementioned relay unit 3 comprises an input converter 31 which converts current data inputted from the current transformer 2 into digital data, a differential detector 32 which locates fault position of the power line 1 from current data of one terminal and current data transmitted from the opposite terminal, a serial/parallel (S/P) converter 33 which converts serial data from a optical-interface 35 to be described later into parallel data to input it into the differential detector 32, and a parallel/serial (P/S) converter 34 which converts parallel data from the differential detector 32 into serial data to input it into the optical-interface 35, the optical-interface 35 converting electric serial data into optical signal and optical signal into electric serial data in order to convert data with a transmitting unit 4.

The transmitting unit 4 comprises a optical-interface 41 corresponding to the optical-interface 35, a carrier-frequency terminal equipment 42 for multiplexing data, and a wireless device 43 provided with an antenna for exchanging data with the opposite terminal through micro-wave.

Usually, in the PCM current differential system instantaneous values of current at both terminals of the power line are sampled with a constant period (12 times of system frequency) and the digital current data (12 bits with sign) obtained in the sampling are transmitted to the opposite terminal according to PCM transmission. At each terminal of the power line 1, differential operation is carried out according to current data of the one terminal and that of the opposite terminal, to judge whether a fault is inside or outside of the protected section.

As the transmission rate of current data is 54kbps (transmitting data of 54 kbits per second), the data length (to be called one frame) per one sampling corresponds to $54k/[50(Hz) \cdot 12] = 90(bits)$. Here, system frequency is made to be 50Hz, and sampling period is 12 times as large as the system frequency.

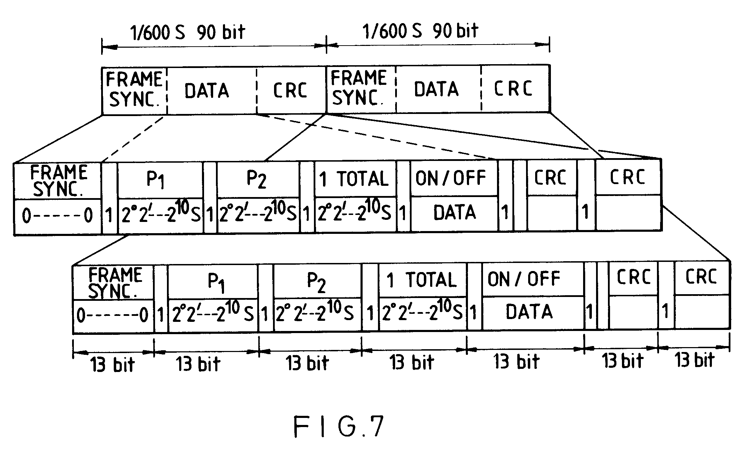

As shown in Fig. 7, in the 90 bits, transmission format of one frame is constructed, comprising current data (12 bits each) in each phase and on/off data bits for control, frame sync bit, CRC (Cyclic Redundancy Check) bit for detecting transmission data error and the like. In the figure each symbol P1, P2, and TOTAL designates current data bit in each phase.

As the conventional digital differential relay system is constructed as aforementioned, in the case where the number of bits more than 12 bits is used for current data, there has been a problem that the other data length of the on/off data for control, frame sync, CRC for detecting transmission data error have to be sacrificed since the transmission format of one frame has 90 bits.

The present invention has been devised in order to solve the problem abovementioned, and the primary object of the invention is to obtain a digital differential relay system capable of transmitting data exceeding a predetermined bits with the data length of the other data being intact.

## Summary of the Invention

The digital differential relay system related to the invention is provided with a data converter converting data on the basis of a certain relation and compacting the bit length of data to transmit the data, and with a data restorer performing reverse-conversion to data at receiving it and restoring it to the one with original-bit length, and has little effect upon relay characteristics even if data with length of, for example, 12-bits or 16-bits is transmitted by compacting bit length thereof at the data converter at the transmitting side to transmit it and by returning the bit length to the original one at the data restorer at the receiving side.

## Brief Description of the Drawings

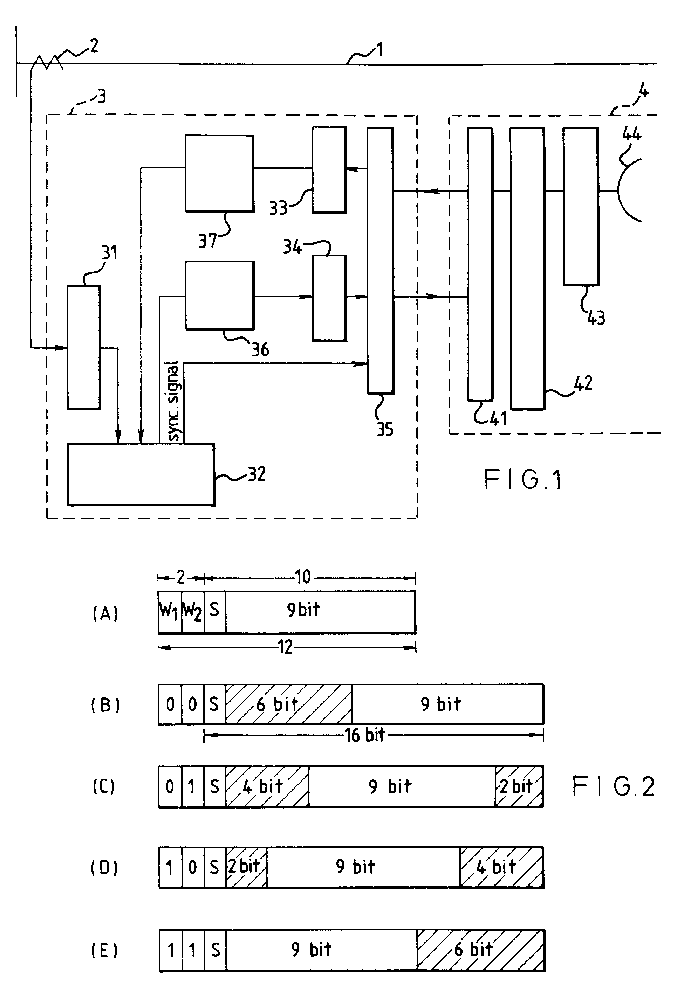

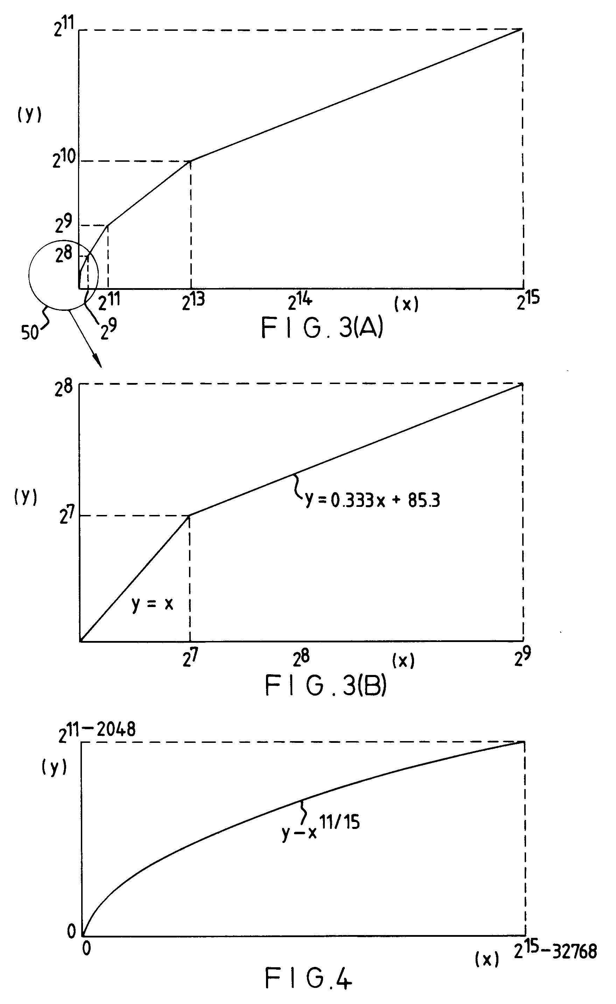

Fig. 1 is a block diagram of a digital current differential relay system according to one embodiment of the invention. Fig. 2 is a transmission format diagram of current data according to the invention. Fig. 3 and Fig. 4 are conversion diagrams of current data in the embodiment according to the invention. Fig. 5 is a diagram showing a data conversion table for data conversion shown in Fig. 4. Fig. 6 is a block diagram of a conventional digital current differential relay system. Fig. 7 is a transmission format diagram of current data in the conventional system. In addition, in each drawing, the same portions or corresponding portions are designated by the same symbols.

Description of the Preferred Embodiments

In the following, explanation will be given on one embodiment of the invention. In the embodiment, explanation will be made on the case where current data of 16-bit length is transmitted in 12-bit length, however, the same can be said of other-bit length. In Fig. 1, a data converter 36 converts current data of 16-bit length into current data of 12-bit length according to a relational expression. A data restorer 37 is the one which restores the current data of 12-bit length transmitted from the opposite terminal to the current data of the original 16-bit length.

Fig. 2(A) through (E) are views showing the data conversion form in the data converter 36, Fig. 2(A) showing transmission format (12-bit length). When input data of the data converter 36 is X (decimal number), the format shown in Fig. 2(A) can be converted into transmission formats respectively shown in Fig. 2(B) through (E) depending upon the value of X.

$- (2^9 - 1) < X < 2^9$     (B)

$- (2^{11} - 1) < x \leq -(2^9 - 1)$,
$2^9 \leq X < -2^{11}$     (C)

$- (2^{13} - 1) < X \leq - (2^{11} - 1)$
$2^{11} \leq X < 2^{13}$     (D)

$- (2^{15} - 1) < X \leq - (2^{13} - 1)$
$2^{13} \leq X < 2^{15}$     (E)

Here, bits with oblique lines shown in Fig. 2 are the ones omitted from 16-bit data, in order to show that to which region among Fig. 2(B) through (E) each data belongs, weighting bits $W_1$, $W_2$ are put in the head of each data, thereby the region is shown according to the bits $W_1$, $W_2$. A symbol S designates a code (sign) bit.

According to such an operation, current data of 16 bits is converted into current data of the sum of 2 bits (weighting bits) and 10 bits (data bits), that is, 12 bits, and is transmitted to the opposite terminal as current data of 12 bits.

It is found that there is no error accompanied with data conversion in the region shown in Fig. 2-(B), when it is examined that how much error is generated in current data. In the region shown in Fig. 2(C), as the low order two bits are ignored, the maximum value of error is $(2^2 - 1)/2^9 = 0.6\%$. In the region shown in Fig. 2(D), as the low order four bits are ignored, the maximum value of error is $(2^4 - 1)/2^{11} = 0.8\%$. In the region shown in Fig. 2(E), as the low order six bits are ignored, the maximum value of error is $(2^6 - 1)/2^{13} = 0.8\%$.

Accordingly, in the whole regions, as the value of error accompanied with the data conversion is not more than 0.8%, it is not problematical to usual relay operation.

In addition, in the embodiment abovementioned, the number of division is 4 with the weighting as two bits, however, the same effect can be obtained when the number of division is changed by making the weighting to be other bits.

In the embodiment abovementioned the region to which data belongs is shown by adding weighting bits, however, the same effect can be obtained by converting and transmitting data on the basis of the predetermined data conversion equations while not adding weighting bits, and by carrying out reverse- conversion of the abovementioned data conversion equations at receiving data, thereby restoring data.

Fig. 3(A) is a data conversion diagram showing a relational expression for converting current data of 16-bit length into current data of 12-bit length to be transmitted. Fig. 3(B) is an enlarged view of the region 50 shown in Fig. 3(A). When x designates current data of 16-bit length and y designates current data of 12-bit length, the relation between them is expressed as follows.

(I)    When $- (2^7 - 1) \leq x \leq 2^7$
$y = x$

(II)    When $- (2^9 - 1) \leq x < - (2^7 - 1)$
or when $2^7 < x \leq 2^9$

$$y = \frac{2^8 - 2^7}{2^9 - 2^7} (x - 2^7) + 2^7$$

$$= 0.333x + 85.3$$

(III)    When $- (2^{11} - 1) \leq x < - (2^9 - 1)$
or when $2^9 < x \leq 2^{11}$

$$y = \frac{2^9 - 2^8}{2^{11} - 2^9} (x - 2^9) + 2^8$$

$$= 0.167x + 170.6$$

(IV)    When $- (2^{13} - 1) \leq x < - (2^{11} - 1)$
or when $2^{11} < x \leq 2^{13}$

$$y = \frac{2^{10} - 2^9}{2^{13} - 2^{11}} (x - 2^{11}) + 2^9$$

$$= 0.0833x + 341.3$$

(V)　　When $-(2^{15} - 1) \leq x < -(2^{13} - 1)$
or when $2^{13} < x \leq 2^{15}$

$$y = \frac{2^{11} - 2^{10}}{2^{15} - 2^{13}} (x - 2^{13}) + 2^{10}$$

$$= 0.0417x + 682.6$$

The maximum value of the data error accompanied with the data conversion abovementioned is as follows.

range (I) : error 0
range (II) : error $2^1/2^7 = 1.6\%$
range (III) : error $2^2/2^9 = 0.8\%$
range (IV) : error $2^3/2^{11} = 0.4\%$
range (V) : error $2^4/2^{13} = 0.2\%$

The values are no problematical for use.

Fig. 3 shows an example in which the region is divided into small divisions, however, it is also possible to make one relational expression without dividing the region. Fig. 4 is an example of a data conversion diagram of current data according to this method, in which relational expression for converting input x (16bits) into output (12bits) is made to be $y = x^{11/15}$.

In this case, if a microcomputer has an efficient throughput, it doesn't matter that conversion is carried out intact, however, it may be also possible that output y is restored to input x at the time of receiving data after preparing data conversion table shown in Fig. 5 and converting input x into output y on the basis of the table. In this example, though large error is generated at the time when an extremely small amount of input data is inputted, it becomes small as data becomes large, therefore this example can be materialized by taking this point into consideration.

Industrially Applicable

As abovementioned, as the invention is so constructed that data may be transmitted by compacting the bit length thereof at the transmitting side and while the bit length of the data may be restored at the receiving side, even if the number of bits of data exceeds a predetermined one, such effect is obtained that relay characteristics are hardly affected without sacrificing the number of bits other data.

Claims

1. A digital differential relay system, periodically sampling instantaneous data of electric current at both terminals of a power line to be protected, and comprising at each of both terminals of said power line, a relay unit which locates a fault position of said power line according to sampled data of one terminal and that of the opposite terminal and a communication unit which transmits data of one terminal inputted therein through said relay unit to the opposite terminal as well as receives data from the opposite terminal to supply it to said relay unit, being characterized by that said realy unit comprises a data converter which converts bit length of data of one terminal and supplies it to said communication unit and a data restorer which restores bit length of data of the opposite terminal received at said communicating unit into the original one.

2. A digital differential relay system as set forth in Claim 1, being characterized by that said data converter converts bit length of data of one terminal into bit length shorter than said bit length and supplies it to said communicating unit.

3. A digital differential relay system as set forth in Claim 1 or Claim 2, being characterized, in the case where there are a plurality kinds of data, by adding weighting bits to the head of these data, judging the kinds of the weighting bits, and by restoring bit length of data of the opposite terminal into the original one by said data restorer corresponding to the kinds of the weighting bits.

4. A digital differential relay system as set forth in Claim 1 or Claim 2 being characterized by that data conversion is carried out according to a predetermined data conversion method and while data restoration is carried out according to a reverse-converting of said data conversion method.

5. A digital differential relay system as set forth in Claim 1 or Claim 2, being characterized by that said data converter and data restorer have memories in which a data conversion table is prepared respectively and that data conversion and data restoration are carried out on the basis of said data conversion table.

FIG.1

FIG.2

(A)

| | | | |
|---|---|---|---|
| W₁ | W₂ | S | 9 bit |

(B)

| | | | | |
|---|---|---|---|---|
| 0 | 0 | S | 6 bit | 9 bit |

(C)

| | | | | | |
|---|---|---|---|---|---|
| 0 | 1 | S | 4 bit | 9 bit | 2 bit |

(D)

| | | | | | |
|---|---|---|---|---|---|
| 1 | 0 | S | 2 bit | 9 bit | 4 bit |

(E)

| | | | | |
|---|---|---|---|---|
| 1 | 1 | S | 9 bit | 6 bit |

F I G . 3(A)

$y = 0.333x + 85.3$

$y = x$

F I G . 3(B)

$y - x^{11/15}$

F I G . 4

| x | → | y | → | x |
|---|---|---|---|---|
| 1 | | 1 | | 1 |
| 2 | | 2 | | 3 |
| 3 | | 2 | | 3 |
| 100 | | 29 | | 99 |
| 1000 | | 158 | | 996 |
| 10000 | | 858 | | 10005 |
| 32768 | | 2048 | | 32768 |

FIG.5

FIG.6

EP 0 477 371 A1

1/600 S 90 bit | 1/600 S 90 bit

| FRAME SYNC. | DATA | CRC | FRAME SYNC. | DATA | CRC |

| FRAME SYNC. | | $P_1$ | $P_2$ | 1 TOTAL | ON/OFF | | CRC | CRC |
| 0 ----- 0 | 1 | $2^0 2^1$--$2^{10}$ S | 1 $2^0 2^1$--$2^{10}$ S | 1 $2^0 2^1$--$2^{10}$ S | 1 DATA | 1 | 1 | |

| FRAME SYNC. | | $P_1$ | $P_2$ | 1 TOTAL | ON/OFF | | CRC | CRC |
| 0 ------ 0 | 1 | $2^0 2^1$--$2^{10}$ S | 1 $2^0 2^1$--$2^{10}$ S | 1 $2^0 2^1$--$2^{10}$ S | 1 DATA | 1 | 1 | |

13 bit | 13 bit | 13 bit | 13 bit | 13 bit | 13 bit | 13 bit

FIG.7

# INTERNATIONAL SEARCH REPORT

International Application No  PCT/JP91/00061

**I. CLASSIFICATION OF SUBJECT MATTER** (if several classification symbols apply, indicate all) [6]

According to International Patent Classification (IPC) or to both National Classification and IPC

Int. Cl$^5$   H02H3/28

**II. FIELDS SEARCHED**

| Minimum Documentation Searched [7] | |
|---|---|
| Classification System | Classification Symbols |
| IPC | H02H3/26-3/28, H04B14/00-14/06 |

Documentation Searched other than Minimum Documentation
to the Extent that such Documents are Included in the Fields Searched [8]

| | |
|---|---|
| Jitsuyo Shinan Koho | 1926 – 1990 |
| Kokai Jitsuyo Shinan Koho | 1971 – 1990 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | JP, A, 60-91816 (Meidensha Electric Mfg. Co., Ltd.), May 23, 1985 (23. 05. 85), Line 7, lower left column, page 2 to line 2, lower right column, page 3 (Family: none) | 1, 2, 3, 4, 5 |
| Y | JP, A, 56-115048 (NEC Corp.), September 10, 1981 (10. 09. 81), Figs. 1, 2, 5 (Family: none) | 3, 4, 5 |

\* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| January 31, 1991 (31. 01. 91) | February 12, 1991 (12. 02. 91) |

| International Searching Authority | Signature of Authorized Officer |
|---|---|
| Japanese Patent Office | |

Form PCT/ISA/210 (second sheet) (January 1985)